(19) Europäisches Patentamt
European Patent Office
Office européen des brevets

(11) **EP 4 394 326 A1**

(12) **EUROPEAN PATENT APPLICATION**
published in accordance with Art. 153(4) EPC

(43) Date of publication:
**03.07.2024 Bulletin 2024/27**

(21) Application number: **23790923.9**

(22) Date of filing: **10.03.2023**

(51) International Patent Classification (IPC):
***G01C 25/00*** (2006.01)

(52) Cooperative Patent Classification (CPC):
**G01C 25/00**

(86) International application number:
**PCT/CN2023/080900**

(87) International publication number:
**WO 2023/202262 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 CN 202210408828**

(71) Applicant: **Qianxun Spatial Intelligence Inc.**
**Yangpu District**
**Shanghai 200438 (CN)**

(72) Inventors:
• LIU, Yang
  Shanghai 200438 (CN)
• ZHAO, Hongsong
  Shanghai 200438 (CN)
• XING, Juhong
  Shanghai 200438 (CN)
• WANG, Yongsong
  Shanghai 200438 (CN)
• QIU, Mobo
  Shanghai 200438 (CN)

(74) Representative: **Kraus & Lederer PartGmbB**
**Thomas-Wimmer-Ring 15**
**80539 München (DE)**

(54) **INERTIAL NAVIGATION INITIAL-ALIGNMENT METHOD AND APPARATUS APPLIED TO OBLIQUE MEASUREMENT, AND DEVICE**

(57) An inertial navigation initial alignment method, apparatus (300) and device applicable to inclination measurement. The method includes: acquiring (101) a first specific force vector of an inertial navigation system of a receiver in a body coordinate system, and Doppler velocity information and position information; determining (102), according to the Doppler velocity information and the position information, a second specific force vector of the inertial navigation system of the receiver in a navigation coordinate system; determining (103) a first projection of the first specific force vector in an initial moment body inertial frame, and determining a second projection of the second specific force vector in an initial moment navigation inertial frame; performing (104) time integration on the first projection and the second projection respectively to obtain first projection integration velocities and second projection integration velocities; and determining (105), according to the first projection integration velocities and the second projection integration velocities of at least two different moments, a first relative relationship of the body coordinate system with respect to the navigation coordinate system. According to the inertial navigation initial alignment method applicable to inclination measurement, alignment accuracy and reliability of the initial alignment of the inertial navigation system can be improved.

Fig. 1

EP 4 394 326 A1

**Description**

**CROSS-REFERENCE TO RELATED APPLICATION**

The present application claims the priority to Chinese Patent Application No. 202210408828.5 filed on April 19, 2022, which is incorporated herein by reference in its entirety.

**TECHNICAL FIELD**

The present application relates to the field of positioning technology, and particularly, to an inertial navigation initial alignment method, apparatus and device applicable to inclination measurement.

**BACKGROUND**

Generally, in inclination measurement technology, an Inertial Measurement Unit (IMU) is integrated into a Global Navigation Satellite System (GNSS) receiver, and Inertial Navigation System (INS)/GNSS integrated navigation technology is used, so that a real-time high accuracy attitude and heading information of the receiver is obtained, and under a condition that a centering rod is in an inclination state, coordinates of an antenna phase center of the receiver may be accurately transformed onto a point to be measured, thereby completing inclination measurement.

Initial alignment of an inertial navigation system (inertial navigation for short) in an inclination measurement application includes two parts: initial coarse alignment and initial fine alignment. Generally, the initial coarse alignment is initialization or initial alignment of attitude and heading of a Micro-Electro-Mechanical System (MEMS) IMU, that is, determining a relative relationship of a body coordinate system with respect to a navigation coordinate system. The initial fine alignment is fine alignment of the inertial navigation by starting an integrated navigation filter and in conjunction with an alignment result of the initial coarse alignment, thereby completing a whole initialization process of the inertial navigation.

Since cost of a whole machine is controlled very strictly for measurement and mapping Real-time kinematic (RTK) products, a low-cost and low-accuracy consumer-level or industrial-level MEMS IMU device is generally used. Due to influence of the accuracy of the MEMS IMU device, the inertial navigation initial coarse alignment is of relatively low accuracy and relatively poor reliability, thereby affecting accuracy and reliability of the inertial navigation initial alignment.

**SUMMARY**

Embodiments of the present application provide an inertial navigation initial alignment method, apparatus and device applicable to inclination measurement, so that problems such as relatively low accuracy and relatively poor reliability of the initial alignment of the inertial navigation system can be solved.

In a first aspect, the embodiments of the present application provide an inertial navigation initial alignment method applicable to inclination measurement including:

acquiring a first specific force vector of an inertial navigation system of a receiver in a body coordinate system, and Doppler velocity information and position information output by the receiver, wherein the first proportional vector is output by an accelerometer of the inertial navigation system of the receiver;

determining, according to the Doppler velocity information and the position information, a second specific force vector of the inertial navigation system of the receiver in a navigation coordinate system;

determining a first projection of the first specific force vector in an initial moment body inertial frame, and determining a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;

performing time integration on the first projection and the second projection respectively to obtain first projection integration velocities and second projection integration velocities; and

determining, according to the first projection integration velocities and the second projection integration velocities of at least two different moments, a first relative relationship of the body coordinate system with respect to the navigation coordinate system to perform initial alignment on the inertial navigation system.

In a second aspect, the embodiments of the present application provide an inertial navigation initial alignment apparatus applicable to inclination measurement including:

an acquisition module configured to acquire a first specific force vector of an inertial navigation system of a receiver in a body coordinate system, and Doppler velocity information and position information output by the receiver, wherein the first proportional vector is output by an accelerometer of the inertial navigation system of the receiver;

a first determination module configured to determine, according to the Doppler velocity information and the position information, a second specific force vector of the inertial navigation system of the receiver in a navigation coordinate system;

a second determination module configured to determine a first projection of the first specific force vector in an initial moment body inertial frame, and determine a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;

an integration module configured to perform time integration on the first projection and the second projection respectively to obtain first projection integration velocities and second projection integration velocities; and

a third determination module configured to determine, according to the first projection integration velocities and the second projection integration velocities of at least two different moments, a first relative relationship of the body coordinate system with respect to the navigation coordinate system to perform initial alignment on the inertial navigation system.

In a third aspect, the present application provides an electronic device including a processor and a memory storing computer program instructions; wherein the processor executes the computer program instructions to implement the inertial navigation initial alignment method applicable to the inclination measurement according to the first aspect.

In a fourth aspect, the present application provides a computer-readable storage medium having computer program instructions stored thereon, wherein the computer program instructions, when executed by a processor, implement the inertial navigation initial alignment method applicable to the inclination measurement according to the first aspect.

In a fifth aspect, the embodiments of the present application provide a computer program product, wherein instructions in the computer program product are executed by a processor of an electronic device to cause the electronic device to perform the inertial navigation initial alignment method applicable to the inclination measurement according to the first aspect.

In the embodiments of the present application, the first specific force vector of the inertial navigation system of the receiver in the body coordinate system, and the Doppler velocity information and the position information output by the receiver are acquired; the second specific force vector of the inertial navigation system of the receiver in the navigation coordinate system is determined according to the Doppler velocity information and the position information, then the first projection of the first specific force vector in the initial moment body inertial frame is determined, and the second projection of the second specific force vector in the initial moment navigation inertial frame is determined, the time integration is performed on the first projection and the second projection respectively to obtain the first projection integration velocities and the second projection integration velocities, and the first relative relationship of the body coordinate system with respect to the navigation coordinate system is determined according to the first projection integration velocities and the second projection integration velocities of at least two different moments to perform the initial alignment on the inertial navigation system. As such, in the embodiments of the present application, by using specific force vectors output by the accelerometer of the inertial navigation system of the receiver at different moments, and in conjunction with GNSS position and velocity information, an initial coarse alignment is performed on the inertial navigation system, so that accuracy and reliability of the inertial navigation initial coarse alignment can be improved, thereby improving accuracy and reliability of inertial navigation initial alignment.

## BRIEF DESCRIPTION OF THE DRAWINGS

In order to illustrate technical solutions of embodiments of the present application more clearly, the drawings required for the embodiments of the present application will be briefly described. For a person skilled in the art, other drawings can also be obtained from these drawings without any inventive effort.

Fig. 1 is a schematic flowchart of an inertial navigation initial alignment method applicable to inclination measurement according to embodiments of the present application;

Fig. 2 is a schematic view of an inertial navigation initial alignment process applicable to inclination measurement according to embodiments of the present application;

Fig. 3 is a schematic structural view of an inertial navigation initial alignment apparatus applicable to inclination measurement according to embodiments of the present application;

Fig. 4 is a schematic structural view of an electronic device according to embodiments of the present application.

**DETAILED DESCRIPTION**

Features and exemplary embodiments of various aspects of the present application will be described in detail below. In order to make the objects, technical solutions and advantages of the present application clearer, the present application is further described in detail below with reference to the accompanying drawings and specific embodiments. It should be understood that the specific embodiments described herein are only used to explain the present application, but not to limit the present application. For those skilled in the art, the present application can be implemented without some of these specific details. The following description of the embodiments is only to provide a better understanding of the present application by illustrating examples of the present application.

It should be noted that, in the present application, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without further limitation, an element preceded by "including..." does not exclude presence of additional similar elements in a process, a method, an article or a device including the element.

An inertial navigation initial alignment method, apparatus and device applicable to inclination measurement according to the embodiments of the present application will be described in detail below with reference to the accompanying drawings through specific embodiments and application scenarios thereof.

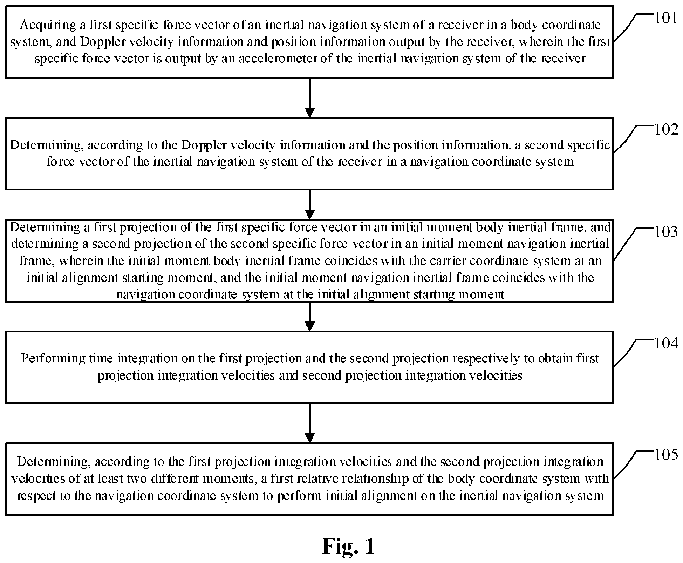

Fig. 1 is a schematic flowchart of an inertial navigation initial alignment method applicable to inclination measurement according to embodiments of the present application. As shown in Fig. 1, the inertial navigation initial alignment method applicable to the inclination measurement may include:

Step 101: acquiring a first specific force vector of an inertial navigation system of a receiver in a body coordinate system, and Doppler velocity information and position information output by the receiver, wherein the first proportional vector is output by an accelerometer of the inertial navigation system of the receiver;

Step 102: determining, according to the Doppler velocity information and the position information, a second specific force vector of the inertial navigation system of the receiver in a navigation coordinate system;

Step 103: determining a first projection of the first specific force vector in an initial moment body inertial frame, and determining a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;

Step 104: performing time integration on the first projection and the second projection respectively to obtain first projection integration velocities and second projection integration velocities; and

Step 105: determining, according to the first projection integration velocities and the second projection integration velocities of at least two different moments, a first relative relationship of the body coordinate system with respect to the navigation coordinate system to perform initial alignment on the inertial navigation system.

In the embodiments of the present application, the first specific force vector of the inertial navigation system of the receiver in the body coordinate system, and the Doppler velocity information and the position information output by the receiver are acquired; the second specific force vector of the inertial navigation system of the receiver in the navigation coordinate system is determined according to the Doppler velocity information and the position information, then the first projection of the first specific force vector in the initial moment body inertial frame is determined, and the second projection of the second specific force vector in the initial moment navigation inertial frame is determined, the time integration is performed on the first projection and the second projection respectively to obtain the first projection integration velocities and the second projection integration velocities, and the first relative relationship of the body coordinate system with respect to the navigation coordinate system is determined according to the first projection integration velocities and the second projection integration velocities of at least two different moments to perform initial coarse alignment on the inertial navigation system. As such, in the embodiments of the present application, by using specific force vectors output by the accelerometer of the inertial navigation system of the receiver at different moments, and in conjunction with GNSS position and velocity information, an initial coarse alignment is performed on the inertial navigation system, so that accuracy and reliability of the inertial navigation initial coarse alignment can be improved, thereby improving accuracy and reliability of inertial navigation initial alignment.

In an example, the initial moment body inertial frame $b_0$ coincides with the body coordinate system b at the initial alignment starting moment, then there is no rotation relative to an inertial space; and the initial moment navigation inertial frame $n_0$ coincides with the navigation coordinate system n at the initial alignment starting moment, then there is no rotation relative to the inertial space. It may be considered that the body coordinate system b and the navigation coordinate system n at the initial alignment starting moment are solidified into the frame $b_0$ and the frame $n_0$ by inertial, that is, a definition of an inertial solidification coordinate system.

The first specific force vector of the inertial navigation system of the receiver in the body coordinate system b is set to be $f^b$, the second specific force vector of the inertial navigation system of the receiver in the navigation coordinate system n determined according to the Doppler velocity information and the position information is set to be $f^n$, the first projection of the first specific force vector $f^b$ in the initial moment body inertial frame $b_0$ is set to be $f^{b_0}$, the second projection of the second specific force vector $f^n$ in the initial moment navigation inertial frame $n_0$ is set to be $f^{n_0}$, the first projection integration velocity obtained by performing time integration on the first projection $f^{b_0}$ is set to be $v^{b_0}(t)$, the second projection integration velocity obtained by performing time integration on the second projection $f^{n_0}$ is set to be $v^{n_0}(t)$, then the relative relationship $C_b^n$ of the body coordinate system b with respect to the navigation coordinate system n is determined according to the first projection integration velocities $v^{b_0}(t_i)$, $v^{b_0}(t_j)$ and the second projection integration velocities $v^{n_0}(t_i)$, $v^{n_0}(t_j)$ corresponding respectively to the moments $t_i$ and $t_j$.

In some possible implementations of the embodiments of the present application,

$$f^n = \dot{v}^n + \left(2\omega_{ie}^n + \omega_{en}^n\right) \times v^n - g^n$$

, in which $\dot{v}^n$ is a linear motion acceleration in the navigation coordinate system n, and $\omega_{ie}^n$, $\omega_{en}^n$ and $g^n$ are a rotational angular velocity vector of the earth, an angular velocity vector of the body relative to a frame e of the earth coordinate system, and a gravity vector in the navigation coordinate system n,

respectively. $\omega_{ie}^n = \begin{bmatrix} 0 & \omega_{ie}cosL & \omega_{ie}sinL \end{bmatrix}^T$, $g^n = [0\ 0\ \text{-}g]^T$, and L is a geographic latitude. $\dot{v}^n$ may be obtained

$$\dot{v}^n = \frac{v^n(t_k) - v^n(t_{k-1})}{t_k - t_{k-1}}$$

according to GNSS velocity difference, and $v^n(t_k)$ is the Doppler velocity output by the receiver at the moment $t_k$.

In some possible implementations of the embodiments of the present application, the relative relationship $C_b^n$ of the body coordinate system b with respect to the navigation coordinate system n may be represented as:

$$C_b^n = C_{n_0}^n C_{b_0}^{n_0} C_b^{b_0} \tag{1}$$

In the equation (1), $C_{n_0}^n$ is a relative relationship of the navigation coordinate system n with respect to the initial moment navigation inertial frame $n_0$, $C_{b_0}^{n_0}$ is a relative relationship of the initial moment body inertial frame $b_0$ with respect to the initial moment navigation inertial frame $n_0$, and $C_b^{b_0}$ is a relative relationship of the body coordinate system b with respect to the initial moment body inertial frame $b_0$.

Based on this, in a motion state, performing initial coarse alignment of the relative relationship $C_b^n$ of the body coordinate system b with respect to the navigation coordinate system n is transformed into calculating, in the inertial frame, the relative relationship $C_{b_0}^{n_0}$ of the initial moment body inertial frame $b_0$ with respect to the initial moment navigation inertial frame $n_0$.

Based on this, in some possible implementations of the embodiments of the present application, step 105 may include: determining, according to the first projection integration velocities and the second projection integration velocities of at least two different moments, a second relative relationship $C_{b_0}^{n_0}$ of the initial moment navigation inertial frame $n_0$

with respect to the initial moment body inertial frame $b_0$; determining the first relative relationship $C_b^n$ according to the second relative relationship $C_{b_0}^{n_0}$, a first matrix $C_{n_0}^n$ and a second matrix $C_b^{b_0}$, in which the first matrix $C_{n_0}^n$ is determined according to a rotational angular velocity of the earth, a geographic latitude and an alignment duration, and is used to characterize a relative relationship of the navigation coordinate system n with respect to the initial moment navigation inertial frame $n_0$, and the second matrix $C_b^{b_0}$ is calculated according to a gyro output in the inertial navigation system of the receiver, and is used to characterize a relative relationship of the body coordinate system b with respect to the initial moment body inertial frame $b_0$.

In some possible implementations of the embodiments of the present application, a unit orthogonal vector set may be constructed using projection integration velocities at different moments. For example, the unit orthogonal vector set is constructed using the first projection integration velocities $v^{b_0}(t_i)$, $v^{b_0}(t_j)$ and the second projection integration velocities $v^{n_0}(t_i)$, $v^{n_0}(t_j)$ corresponding respectively to the moments $t_i$ and $t_j$:

$$U_1^{b_0} = \frac{v^{b_0}(t_i)}{\|v^{b_0}(t_i)\|}$$

$$U_2^{b_0} = \frac{v^{b_0}(t_i) \times v^{b_0}(t_j)}{\|v^{b_0}(t_i) \times v^{b_0}(t_j)\|}$$

$$U_3^{b_0} = \frac{v^{b_0}(t_i) \times v^{b_0}(t_j) \times v^{b_0}(t_i)}{\|v^{b_0}(t_i) \times v^{b_0}(t_j) \times v^{b_0}(t_i)\|}$$

$$U_1^{n_0} = \frac{v^{n_0}(t_i)}{\|v^{n_0}(t_i)\|}$$

$$U_2^{n_0} = \frac{v^{n_0}(t_i) \times v^{n_0}(t_j)}{\|v^{n_0}(t_i) \times v^{n_0}(t_j)\|}$$

$$U_3^{n_0} = \frac{v^{n_0}(t_i) \times v^{n_0}(t_j) \times v^{n_0}(t_i)}{\|v^{n_0}(t_i) \times v^{n_0}(t_j) \times v^{n_0}(t_i)\|}$$

Then, the relative relationship $C_{b_0}^{n_0}$ of the initial moment navigation inertial frame $n_0$ with respect to the initial moment body inertial frame $b_0$ is calculated according to a dual-vector attitude determination method, that is,

$$C_{b_0}^{n_0} = \begin{bmatrix} \left(U_1^{n_0}\right)^T \\ \left(U_2^{n_0}\right)^T \\ \left(U_3^{n_0}\right)^T \end{bmatrix}^{-1} \begin{bmatrix} \left(U_1^{b_0}\right)^T \\ \left(U_2^{b_0}\right)^T \\ \left(U_3^{b_0}\right)^T \end{bmatrix}$$

In some possible implementations of the embodiments of the present application, the relative relationship $C_b^{b_0}$ of the body coordinate system b with respect to the initial moment body inertial frame $b_0$ may be calculated according to the gyro output $\omega_{ib}^b$ in the inertial navigation system of the receiver.

Specifically, by tracking the attitude change of the body, $C_b^{b_0}$ is calculated using the following attitude update algorithm:

$$\dot{C}_b^{b_0} = C_b^{b_0}(\omega_{b_0 b}^b \times) = C_b^{b_0}(\omega_{ib}^b \times)$$

The initial moment body inertial frame $b_0$ is an inertial frame, and frame i is also an inertia frame, accordingly, $\omega_{b_0 b}^b = \omega_{ib}^b$ .

In some possible implementations of the embodiments of the present application, $C_n^{n_0}$ may be updated in real time using the rotational angular velocity $\omega_{ie}$ of the earth, the geographic latitude L and an alignment time t (the time that passes since the moment the alignment begins).

The alignment time t is the time that passes since the moment the alignment begins, and $C_n^{n_0}$ is a transposed matrix of $C_{n_0}^n$ .

$$C_n^{n_0} = \begin{bmatrix} cos\omega_{ie}t & -sin\omega_{ie}t\,sinL & sin\omega_{ie}t\,cosL \\ sin\omega_{ie}t\,sinL & 1-(1-cos\omega_{ie}t)sin^2 L & (1-cos\omega_{ie}t)sinL\,cosL \\ -sin\omega_{ie}t\,cosL & (1-cos\omega_{ie}t)sinL\,cosL & 1-(1-cos\omega_{ie}t)cos^2 L \end{bmatrix}$$

In some possible implementations of the embodiments of the present application, $f^{n_0} = C_n^{n_0} f^n$ , $f^{b_0} = C_b^{b_0} f^b$ , $v^{n_0}(t) = \int_0^t C_n^{n_0}(t) f^n(t) dt$ and $v^{b_0}(t) = \int_0^t C_b^{b_0}(t) f^b(t) dt$ .

In some possible implementations of the embodiments of the present application, the second projection integration velocity $v^{n_0}(t)$ may be calculated according to the equation (2):

$$v^{n_0}(t) = C_n^{n_0}(t) v^n(t) - v^n(0) + \int_0^t C_n^{n_0}(t)\left(\omega_{ie}^n \times v^n(t) - g^n\right) dt \qquad (2)$$

In some possible implementations of the embodiments of the present application, determining, according to the first projection integration velocities and the second projection integration velocities of at least two different moments, the second relative relationship $C_{b_0}^{n_0}$ of the initial moment navigation inertial frame $n_0$ with respect to the initial moment body inertial frame $b_0$ may include: determining a multi-vector attitude determination matrix according to the first projection integration velocity $v^{b_0}(t)$ and the second projection integration velocity $v^{n_0}(t)$ at a plurality of moments; performing singular value decomposition on the multi-vector attitude determination matrix to obtain a singular value decomposition result; and determining, according to the singular value decomposition result, the second relative relationship $C_{b_0}^{n_0}$ .

Specifically, projections of a series of projection integration velocities at different moments in the initial moment body inertial frame $b_0$ and the initial moment navigation inertial frame $n_0$ may obtained, and the projections of the projection integration velocities in the initial moment body inertial frame $b_0$ and the initial moment navigation inertial frame $n_0$ are respectively represented as $\hat{v}^{b_0}(t_k)$ and $\hat{v}^{n_0}(t_k)$ (k = 1, 2, ......, m), and an optimal $C_{b_0}^{n_0}$ matrix is calculated using the series of projection integration velocities. Calculating the optimal $C_{b_0}^{n_0}$ matrix may be described as a least square problem under a constraint, its loss function J is called a Wahba loss function, and each set of vectors is given a weight $w(t_k)$, then

$$J\left(C_{b_0}^{n_0}\right) = \frac{1}{2}\sum_{k=1}^{m} w\left(t_k\right)\left\|\hat{v}^{n_0}\left(t_k\right) - C_{b_0}^{n_0}\hat{v}^{b_0}\left(t_k\right)\right\|^2$$

In order to minimize the Wahba loss function $J$, an optimal matrix $C_{b_0}^{n_0} = UV^T$ may be obtained through a series of derivations.

U and V are obtained based on singular value decomposition of a matrix A, that is $A = UDV^T$, the matrix A is defined as:

$$A = \sum_{k=1}^{m} w\left(t_k\right)\hat{v}^{n_0}\left(t_k\right)\left(\hat{v}^{b_0}\left(t_k\right)\right)^T$$

In some possible implementations of the embodiments of the present application, the optimal $C_{b_0}^{n_0}$ matrix may also be calculated using a quaternion feature vector approach.

After the relative relationship $C_{b_0}^{n_0}$ of the initial moment navigation inertial frame $n_0$ with respect to the initial moment body inertial frame $b_0$ is determined, the relative relationship $C_{b_0}^{n_0}$ of the initial moment navigation inertial frame $n_0$ with respect to the initial moment body inertial frame $b_0$ is brought into the above equation (1) to obtain the relative relationship $C_b^n$ of the body coordinate system b with respect to the navigation coordinate system n.

In the embodiments of the present application, the relative relationship $C_{b_0}^{n_0}$ of the initial moment navigation inertial frame $n_0$ with respect to the initial moment body inertial frame $b_0$ is calculated according to the multi-vector attitude determination matrix, so that the accuracy and reliability of the inertial navigation initial coarse alignment can be further improved, thereby improving the accuracy and reliability of the inertial navigation initial alignment.

In some possible implementations of the embodiments of the present application, before determining the first relative relationship $C_b^n$ according to the second relative relationship $C_{b_0}^{n_0}$, the first matrix $C_{n_0}^n$ and the second matrix $C_b^{b_0}$, the inertial navigation initial alignment method applicable to the inclination measurement according to the embodiments of the present application may further include: compensating an original gyro output according to a prestored gyro zero bias; and determining the second matrix $C_b^{b_0}$ according to the compensated gyro output.

In an example, the prestored gyro zero bias is $\varepsilon$, the original gyro output is $\hat{\omega}_{ib}^b$, then the compensated gyro output is $\tilde{\omega}_{ib}^b = \hat{\omega}_{ib}^b - \varepsilon$; and then the second matrix $C_b^{b_0}$ may be obtained according to the attitude update algorithm.

In the embodiments of the present application, inertial recursive accuracy can be improved by compensating the gyro output.

In some possible implementations of the embodiments of the present application, before step 103, the inertial navigation initial alignment method applicable to the inclination measurement according to the embodiments of the present application may further include: compensating, according to a prestored accelerometer zero bias, the first specific force vector to obtain a compensated first specific force vector; accordingly, step 103 may include: determining a first projection of the compensated first specific force vector in the initial moment body inertial frame.

In an example, the prestored accelerometer zero bias is $\nabla$, and an original accelerometer output specific force is $\hat{f}^b$, then the compensated specific force is $\tilde{f}^b = \hat{f}^b - \nabla$. Then, a projection of the specific force $\tilde{f}^b$ in the initial moment body inertial frame $b_0$ is $f^{b_0} = \boldsymbol{C}_b^{b_0} \tilde{f}^b$ .

In the embodiments of the present application, inertial recursive accuracy can be improved by compensating the accelerometer output specific force.

In some possible implementations of the embodiments of the present application, step 102 may include: determining, according to the Doppler velocity information and the position information, Doppler instantaneous velocities at a plurality of moments and position information difference-based average velocities at the plurality of moments; performing a weighted sum on the Doppler instantaneous velocities at the plurality of moments and the average velocities at the plurality of moments to obtain fitted velocities at the plurality of moments; and determining, according to the fitted velocities at the plurality of moments, the second specific force vector.

In some possible implementations of the embodiments of the present application, the Doppler instantaneous velocity output by the receiver at the moment $t_k$ is $v_{Doppler}^n\left(t_k\right)$ , a position output by the receiver at the moment $t_{k+1}$ is $pos(t_{k+1})$, and a position output by the receiver at the moment $t_{k-1}$ is $pos(t_{k-1})$, then the position information difference-based average velocity at the moment $t_k$ is $\dfrac{pos\left(t_{k+1}\right) - pos\left(t_{k-1}\right)}{t_{k+1} - t_{k-1}}$ , then the fitted velocity at the moment $t_k$ is

$$v^n(t_k) = \alpha v_{Doppler}^n\left(t_k\right) + \beta \frac{pos\left(t_{k+1}\right) - pos\left(t_{k-1}\right)}{t_{k+1} - t_{k-1}}$$

. $\alpha$ and $\beta$ are weights of the Doppler velocity and the position difference velocity, respectively, and $\alpha + \beta = 1$.

In some possible implementations of the embodiments of the present application, $\alpha$ and $\beta$ may be dynamically adjusted according to Doppler velocity accuracy and position difference velocity accuracy.

In some possible implementations of the embodiments of the present application, the fitted velocity at the moment $t_k$ may further be determined by an approach such as a linear fitting or the like using pre-and post-epoch Doppler velocity and position information.

After the fitted velocity at the moment $t_k$ is determined, the second specific force vector $f^n$ of the inertial navigation system of the receiver in the navigation coordinate system n may be calculated according to the fitted velocity at the moment $t_k$.

In the embodiments of the present application, the fitted velocities at the plurality of moments are obtained by performing a weighted sum on the Doppler instantaneous velocities at the plurality of moments and the average velocities at the plurality of moments, so that a more accurate velocity may be obtained, calculation accuracy of the velocity of the body may be improved, more accurate second specific force vector can be obtained, the accuracy and reliability of the inertial navigation initial coarse alignment can be further improved, thereby improving the accuracy and reliability of the inertial navigation initial alignment.

After an initial coarse alignment is performed on the inertial navigation, an accuracy alignment may be performed by starting an integrated navigation filter, thereby completing a whole initialization process of the inertial navigation.

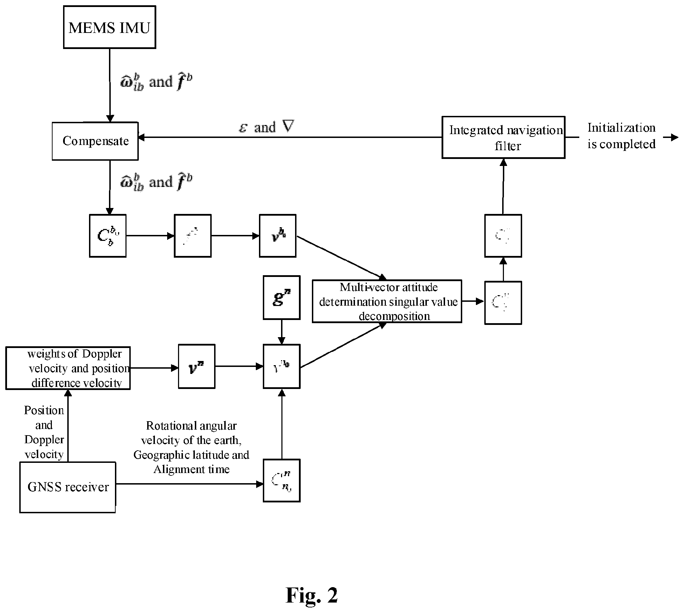

An inertial navigation initial alignment process will be described below with reference to Fig 2. Fig. 2 is a schematic view of an inertial navigation initial alignment process applicable to inclination measurement according to embodiments of the present application.

First, a gyro output angular velocity of a MEMS IMU device is $\widehat{\omega}_{ib}^b$ , and an accelerometer output specific force is $\hat{f}^b$. The integrated navigation filter outputs the gyro zero bias $\varepsilon$ and the accelerometer zero bias $\nabla$, and the gyro

output angular velocity $\widehat{\omega}^b_{ib}$ and the accelerometer output specific force $\hat{f}^b$ are compensated by the gyro zero bias $\varepsilon$ and the accelerometer zero bias V to obtain a compensated angular velocity $\widetilde{\omega}^b_{ib} = \widehat{\omega}^b_{ib} - \varepsilon$ and a compensated accelerometer specific force $\widetilde{f}^b = \hat{f}^b - \nabla$. The relative relationship $C^{b_0}_b$ of the body coordinate system b with respect to the initial moment body inertial frame $b_0$ is calculated according to the compensated angular velocity, then the projection $f^{b_0}$ of $\widetilde{f}^b$ in the initial moment body inertial frame $b_0$ is determined according to $C^{b_0}_b$ and $\widetilde{f}^b$, and the time integration is performed on $f^{b_0}$ to obtain the projection integration velocity $v^{b_0}$.

At the same time, a velocity $v^n$ of the body in the navigation coordinate system n is calculated according to the position and the Doppler velocity output by the GNSS receiver and based on the position difference and the weighted sum, and the relative relationship $C^n_{n_0}$ of the navigation coordinate system n with respect to the initial moment navigation inertial frame $n_0$ is calculated according to the rotation angle velocity $\omega_{ie}$ of the earth, the geographic latitude L and the alignment time t, then the projection integration velocity $v^{n_0}$ is obtained according to the gravity vector $g^n$.

According to the $v^{b_0}$ and $v^{n_0}$, the relative relationship $C^{n_0}_{b_0}$ of the initial moment body inertial frame $b_0$ with respect to the initial moment navigation inertial frame $n_0$ is obtained based on multi-vector attitude determination and singular value decomposition.

The relative relationship $C^n_b$ of the body coordinate system b with respect to the navigation coordinate system n is obtained according to $C^{n_0}_{b_0}$, $C^n_{n_0}$ and $C^{b_0}_b$.

Then, the fine alignment is performed by the integrated navigation filter, thereby completing the whole initialization process of the inertial navigation.

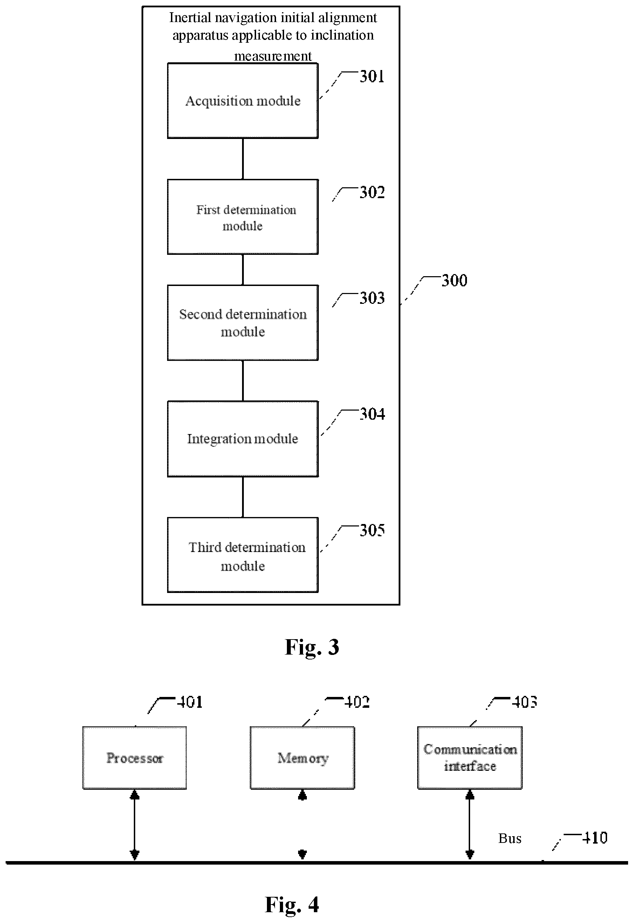

As shown in Fig. 3, corresponding to the implementations of the method described above, the embodiments of the present application further provide an inertial navigation initial alignment apparatus applicable to inclination measurement. Fig. 3 is a schematic structural view of an inertial navigation initial alignment apparatus applicable to inclination measurement according to embodiments of the present application, and the inertial navigation initial alignment apparatus 300 applicable to the inclination measurement may include:

an acquisition module 301 configured to acquire a first specific force vector of an inertial navigation system of a receiver in a body coordinate system, and Doppler velocity information and position information output by the receiver, wherein the first proportional vector is output by an accelerometer of the inertial navigation system of the receiver;
a first determination module 302 configured to determine, according to the Doppler velocity information and the position information, a second specific force vector of the inertial navigation system of the receiver in a navigation coordinate system;
a second determination module 303 configured to determine a first projection of the first specific force vector in an initial moment body inertial frame, and determine a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;
an integration module 304 configured to perform time integration on the first projection and the second projection respectively to obtain first projection integration velocities and second projection integration velocities; and
a third determination module 305 configured to determine, according to the first projection integration velocities and the second projection integration velocities of at least two different moments, a first relative relationship of the body coordinate system with respect to the navigation coordinate system to perform initial alignment on the inertial navigation system.

In the embodiments of the present application, the first specific force vector of the inertial navigation system of the receiver in the body coordinate system, and the Doppler velocity information and the position information output by the receiver are acquired; the second specific force vector of the inertial navigation system of the receiver in the navigation coordinate system is determined according to the Doppler velocity information and the position information, then the first projection of the first specific force vector in the initial moment body inertial frame is determined, and the second projection of the second specific force vector in the initial moment navigation inertial frame is determined, the time integration is performed on the first projection and the second projection respectively to obtain the first projection integration velocities and the second projection integration velocities, and the first relative relationship of the body coordinate system with respect to the navigation coordinate system is determined according to the first projection integration velocities and the second projection integration velocities of at least two different moments to perform initial coarse alignment on the inertial navigation system. As such, in the embodiments of the present application, by using specific force vectors output by the accelerometer of the inertial navigation system of the receiver at different moments, and in conjunction with GNSS position and velocity information, an initial coarse alignment is performed on the inertial navigation system, so that accuracy and reliability of the inertial navigation initial coarse alignment can be improved, thereby improving accuracy and reliability of inertial navigation initial alignment.

In some possible implementations of the embodiments of the present application, the third determination module 305 includes:

a first determination sub-module configured to determine, according to the first projection integration velocities and the second projection integration velocities of the at least two different moments, a second relative relationship of the initial moment navigation inertial frame with respect to the initial moment body inertial frame; and
a second determination sub-module configured to determine the first relative relationship according to the second relative relationship, a first matrix and a second matrix, wherein the first matrix is determined according to a rotational angular velocity of the earth, a geographic latitude and an alignment duration, and is used to characterize a relative relationship of the navigation coordinate system with respect to the initial moment navigation inertial frame, and the second matrix is calculated according to a gyro output in the inertial navigation system of the receiver, and is used to characterize a relative relationship of the body coordinate system with respect to the initial moment body inertial frame.

In some possible implementations of the embodiments of the present application, the first determination sub-module is further configured to:

determine a multi-vector attitude determination matrix according to the first projection integration velocities and the second projection integration velocities at a plurality of moments;
perform singular value decomposition on the multi-vector attitude determination matrix to obtain a singular value decomposition result; and
determine, according to the singular value decomposition result, the second relative relationship.

In the embodiments of the present application, the relative relationship of the initial moment navigation inertial frame with respect to the initial moment body inertial frame is calculated according to the multi-vector attitude determination matrix, so that the accuracy and reliability of the inertial navigation initial coarse alignment can be further improved, thereby improving the accuracy and reliability of the inertial navigation initial alignment.

In some possible implementations of embodiments of the present application, the inertial navigation initial alignment apparatus 300 applicable to the inclination measurement may further include:

a first compensation module configured to compensate an original gyro output according to a prestored gyro zero bias; and
a fourth determination module configured to determine the second matrix according to the compensated gyro output.

In the embodiments of the present application, inertial recursive accuracy can be improved by compensating the gyro output.

In some possible implementations of embodiments of the present application, the inertial navigation initial alignment apparatus 300 applicable to the inclination measurement may further include:

a second compensation module configured to compensate, according to a prestored accelerometer zero bias, the first specific force vector to obtain a compensated first specific force vector;
accordingly, the second determination module 303 is further configured to:
determine a first projection of the compensated first specific force vector in the initial moment body inertial frame.

In the embodiments of the present application, inertial recursive accuracy can be improved by compensating the accelerometer output specific force.

In some possible implementations of the embodiments of the present application, the first determination module 302 is configured to:

determine, according to the Doppler velocity information and the position information, Doppler instantaneous velocities at a plurality of moments and position information difference-based average velocities at the plurality of moments;

perform a weighted sum on the Doppler instantaneous velocities at the plurality of moments and the average velocities at the plurality of moments to obtain fitted velocities at the plurality of moments; and

determine the second specific force vector according to the fitted velocities at the plurality of moments.

In the embodiments of the present application, the fitted velocities at the plurality of moments are obtained by performing a weighted sum on the Doppler instantaneous velocities at the plurality of moments and the average velocities at the plurality of moments, so that a more accurate velocity may be obtained, calculation accuracy of the velocity of the body may be improved, more accurate second specific force vector can be obtained, the accuracy and reliability of the inertial navigation initial coarse alignment can be further improved, thereby improving the accuracy and reliability of the inertial navigation initial alignment.

Fig. 4 is a schematic structural view of an electronic device according to the embodiments of the present application.

The electronic device may include a processor 401 and a memory 402 storing computer program instructions.

Specifically, the processor 401 may include a Central Processing Unit (CPU), or an Application Specific Integrated Circuit (ASIC), or one or more integrated circuit(s) configured to implement the embodiments of the present application.

The memory 402 may include a mass memory for storing data or instructions. By way of example, and not limitation, the memory 402 may include a hard disk drive (HDD), a floppy disk drive, a flash memory, an optical disk, a magneto-optical disk, a magnetic tape, or a universal serial bus (USB) drive or a combination of two or more of them. When appropriate, the memory 402 may include a removable or non-removable (or fixed) medium. When appropriate, the memory 402 may be provided inside or outside of an electronic device. In some particular embodiments, the memory 402 is a non-volatile solid state memory.

In some particular embodiments, the memory may include a Read-Only Memory (ROM), a Random Access Memory (RAM), a magnetic disk storage media device, an optical storage media device, a flash memory device, an electrical, optical or other physical/tangible memory storage device. Accordingly, the memory generally includes one or more tangible (non-transitory) computer-readable storage media (for example, memory devices) encoded with software which includes computer-executable instructions, and the software, when executed (for example, by one or more processors), is operable to perform the operations described with reference to the inertial navigation initial alignment method applicable to the inclination measurement according to the present application.

The processor 401 reads and executes the computer program instructions stored in the memory 402 to implement the inertial navigation initial alignment method applicable to the inclination measurement according to the embodiments of the present application.

In one example, the electronic device may further include a communication interface 403 and a bus 410. As shown in Fig. 4, the processor 401, the memory 402, and the communication interface 403 are connected to and communicate with one another through the bus 410.

The communication interface 403 is mainly configured to realize communication between the modules, apparatuses, units and/or devices in the embodiments of the present application.

The bus 410 includes hardware, software, or both of them, to couple components of the electronic device to each other. By way of example, and not limitation, the bus may include an Accelerated Graphics Port (AGP) or other graphics bus, an Enhanced Industry Standard Architecture (EISA) bus, a Front Side Bus (FSB), a Hyper Transport (HT) interconnect, an Industry Standard Architecture (ISA) bus, an infiniband interconnect, a Low Pin Count (LPC) bus, a memory bus, an Micro channel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus or any other suitable bus or a combination of two or more of them. When appropriate, the bus 410 may include one or more buses. Although the embodiments of the present application describe and illustrate a particular bus, any suitable bus or interconnect is considered in the present application.

The electronic device may execute the inertial navigation initial alignment method applicable to the inclination measurement according to the embodiments of the present application, thereby achieving corresponding technical effects of the inertial navigation initial alignment method applicable to the inclination measurement according to the embodiments of the present application.

In addition, the embodiments of the present application further provide a computer-readable storage medium for implementing the inertial navigation initial alignment method applicable to the inclination measurement in the above embodiments. The computer-readable storage medium having computer program instructions stored thereon, and the computer program instructions, when executed by a processor, implement the inertial navigation initial alignment method applicable to the inclination measurement according to the embodiments of the present application. An example of the computer-readable storage medium includes a non-transitory computer-readable medium such as a ROM, a RAM, a magnetic or optical disk, and the like.

The embodiments of the present application further provide a computer program product, and instructions in the computer program product are executed by a processor of an electronic device to cause the electronic device to perform the inertial navigation initial alignment method applicable to the inclination measurement according to the embodiments of the present application, and can achieve the same technical effect, which is not repeated here.

It should be noted that, the present application is not limited to the specific configuration and processing described above and shown in the drawings. For the sake of brevity, a detailed description of the known method is omitted here. In the embodiments, several specific steps are described and shown as examples. However, the method process of the present application is not limited to the specific steps described and shown, and those skilled in the art can make various changes, modifications and additions, or change the sequence of steps after comprehending the gist of the present application.

The functional blocks shown in the structural block diagrams may be implemented as hardware, software, firmware, or a combination thereof. When implemented as hardware, it may be, for example, an electronic circuit, an ASIC, suitable firmware, a plug-in, a functional card, and the like. When implemented as software, elements of the present application are programs or code segments used to perform required tasks. The programs or code segments may be stored in a machine-readable medium, or transmitted on a transmission medium or a communication link through a data signal carried in a carrier wave. A "machine-readable medium" may include any medium that can store or transmit information. An example of the machine-readable media includes an electronic circuit, a semiconductor memory device, a ROM, a flash memory, an Erasable Read Only Memory (EROM), a floppy disk, a Compact Disc Read-Only Memory (CD-ROM), an optical disk, a hard disk, a fiber optic medium, a Radio Frequency (RF) link, and the like. The code segments may be downloaded via a computer network such as the Internet, intranet, and the like.

It should also be noted that, according to the exemplary embodiments described in the present application, some methods or systems are described based on a series of steps or apparatuses. However, the present application is not limited to the order of the steps, that is, the steps may be executed in the order described in the embodiments or in orders different from that in the embodiments, or several steps may be executed at the same time.

Aspects of the present disclosure are described above with reference to the flowchart and/or block diagram of the method, apparatus (system), and computer program product according to the embodiments of the present disclosure. It should be understood that the each block of flowchart illustrations and/or the block diagrams, and a combination of various blocks of the flowchart illustrations and/or the block diagrams may be implemented by the computer program instructions. These computer program instructions may be provided to a processor of a general purpose computer, special purpose computer, or other programmable data processing apparatuses to produce a machine such that execution of the instructions via the processor of the computer or other programmable data processing apparatuses enables the implementation of the functions/actions specified in one or more blocks of the flowchart illustrations and/or block diagrams. Such processor may be but not limited to a general purpose processor, a special purpose processor, an application specific processor, or a field programmable logic circuit. It should also be understood that each block of the block diagrams and/or the flowchart illustrations, and the combination of blocks of the block diagrams and/or the flowchart illustrations may also be implemented by special purpose hardware that performs specified functions or actions, or by the combination of the special purpose hardware and computer instructions.

The above are only specific implementations of the present application, those skilled in the art may clearly understand that the specific working processes of the above systems, modules and units may be referred to the corresponding processes in the foregoing method embodiments, which is not repeated here for the convenience and brevity of the description. It should be understood that the protection scope of the present application is not limited to this, and any person skilled in the art can easily think of various equivalent modifications or replacements within the technical scope disclosed in the present application, and these modifications or replacements should all be covered within the scope of protection of the present application.

**Claims**

1.  An inertial navigation initial alignment method applicable to inclination measurement, comprising:

    acquiring a first specific force vector of an inertial navigation system of a receiver in a body coordinate system, and Doppler velocity information and position information output by the receiver, wherein the first proportional vector is output by an accelerometer of the inertial navigation system of the receiver;
    determining, according to the Doppler velocity information and the position information, a second specific force vector of the inertial navigation system of the receiver in a navigation coordinate system;
    determining a first projection of the first specific force vector in an initial moment body inertial frame, and determining a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;

performing time integration on the first projection and the second projection respectively to obtain first projection integration velocities and second projection integration velocities; and

determining, according to the first projection integration velocities and the second projection integration velocities of at least two different moments, a first relative relationship of the body coordinate system with respect to the navigation coordinate system to perform initial alignment on the inertial navigation system.

2. The method according to claim 1, wherein determining, according to the first projection integration velocities and the second projection integration velocities of the at least two different moments, the first relative relationship of the body coordinate system with respect to the navigation coordinate system comprises:

determining, according to the first projection integration velocities and the second projection integration velocities of the at least two different moments, a second relative relationship of the initial moment navigation inertial frame with respect to the initial moment body inertial frame; and

determining the first relative relationship according to the second relative relationship, a first matrix and a second matrix, wherein the first matrix is determined according to a rotational angular velocity of the earth, a geographic latitude and an alignment duration, and is used to characterize a relative relationship of the navigation coordinate system with respect to the initial moment navigation inertial frame, and the second matrix is calculated according to a gyro output in the inertial navigation system of the receiver, and is used to characterize a relative relationship of the body coordinate system with respect to the initial moment body inertial frame.

3. The method according to claim 2, wherein determining, according to the first projection integration velocities and the second projection integration velocities of the at least two different moments, the second relative relationship of the initial moment navigation inertial frame with respect to the initial moment body inertial frame comprises:

determining a multi-vector attitude determination matrix according to the first projection integration velocities and the second projection integration velocities at a plurality of moments;

performing singular value decomposition on the multi-vector attitude determination matrix to obtain a singular value decomposition result; and

determining the second relative relationship according to the singular value decomposition result.

4. The method according to claim 2, wherein before determining the first relative relationship according to the second relative relationship, the first matrix and the second matrix, the method further comprises:

compensating an original gyro output according to a prestored gyro zero bias; and

determining the second matrix according to the compensated gyro output.

5. The method according to claim 1, wherein before determining the first projection of the first specific force vector in the initial moment body inertial frame, the method further comprises:

compensating, according to a prestored accelerometer zero bias, the first specific force vector to obtain a compensated first specific force vector; and

determining the first projection of the first specific force vector in the initial moment body inertial frame comprises: determining a first projection of the compensated first specific force vector in the initial moment body inertial frame.

6. The method according to claim 1, wherein determining, according to the Doppler velocity information and the position information, the second specific force vector of the inertial navigation system of the receiver in the navigation coordinate system comprises:

determining, according to the Doppler velocity information and the position information, Doppler instantaneous velocities at a plurality of moments and position information difference-based average velocities at the plurality of moments;

performing a weighted sum on the Doppler instantaneous velocities at the plurality of moments and the average velocities at the plurality of moments to obtain fitted velocities at the plurality of moments; and

determining the second specific force vector according to the fitted velocities at the plurality of moments.

7. An inertial navigation initial alignment apparatus applicable to inclination measurement, comprising:

an acquisition module configured to acquire a first specific force vector of an inertial navigation system of a receiver in a body coordinate system, and Doppler velocity information and position information output by the receiver, wherein the first proportional vector is output by an accelerometer of the inertial navigation system of the receiver;

a first determination module configured to determine, according to the Doppler velocity information and the position information, a second specific force vector of the inertial navigation system of the receiver in a navigation coordinate system;

a second determination module configured to determine a first projection of the first specific force vector in an initial moment body inertial frame, and determine a second projection of the second specific force vector in an initial moment navigation inertial frame, wherein the initial moment body inertial frame coincides with the body coordinate system at an initial alignment starting moment, and the initial moment navigation inertial frame coincides with the navigation coordinate system at the initial alignment starting moment;

an integration module configured to perform time integration on the first projection and the second projection respectively to obtain first projection integration velocities and second projection integration velocities; and

a third determination module configured to determine, according to the first projection integration velocities and the second projection integration velocities of at least two different moments, a first relative relationship of the body coordinate system with respect to the navigation coordinate system to perform initial alignment on the inertial navigation system.

8. An electronic device comprising a processor and a memory storing computer program instructions; wherein the processor executes the computer program instructions to implement the inertial navigation initial alignment method applicable to inclination measurement according to any of claims 1 to 6.

9. A computer-readable storage medium having computer program instructions stored thereon, wherein the computer program instructions, when executed by a processor, implement the inertial navigation initial alignment method applicable to inclination measurement according to any of claims 1 to 6.

10. A computer program product, wherein instructions in the computer program product are executed by a processor of an electronic device to cause the electronic device to perform the inertial navigation initial alignment method applicable to inclination measurement according to any of claims 1 to 6.

Acquiring a first specific force vector of an inertial navigation system of a receiver in a body coordinate system, and Doppler velocity information and position information output by the receiver, wherein the first specific force vector is output by an accelerometer of the inertial navigation system of the receiver ⟋⌐101

Determining, according to the Doppler velocity information and the position information, a second specific force vector of the inertial navigation system of the receiver in a navigation coordinate system ⟋⌐102

Determining a first projection of the first specific force vector in an initial moment body inertial frame, and determining a second projection of the second specific force vector in an initial moment navigation inertial frame, wherein the initial moment body inertial frame coincides with the carrier coordinate system at an initial alignment starting moment, and the initial moment navigation inertial frame coincides with the navigation coordinate system at the initial alignment starting moment ⟋⌐103

Performing time integration on the first projection and the second projection respectively to obtain first projection integration velocities and second projection integration velocities ⟋⌐104

Determining, according to the first projection integration velocities and the second projection integration velocities of at least two different moments, a first relative relationship of the body coordinate system with respect to the navigation coordinate system to perform initial alignment on the inertial navigation system ⟋⌐105

**Fig. 1**

MEMS IMU

$\widehat{\omega}_{ib}^{b}$ and $\widehat{f}^{b}$

Compensate ← $\varepsilon$ and $\nabla$ ← Integrated navigation filter → Initialization is completed

$\widehat{\omega}_{ib}^{b}$ and $\widehat{f}^{b}$

$C_{b}^{b_0}$ → → $v^{b_0}$

$g^{n}$

Multi-vector attitude determination singular value decomposition

weights of Doppler velocity and position difference velocity → $v^{n}$ → $v^{n_0}$

Position and Doppler velocity

Rotational angular velocity of the earth, Geographic latitude and Alignment time

GNSS receiver → $C_{n_0}^{n}$

**Fig. 2**

17

Inertial navigation initial alignment
apparatus applicable to inclination
measurement

Acquisition module / 301

First determination
module / 302

Second determination
module / 303

/ 300

Integration module / 304

Third determination
module / 305

**Fig. 3**

Processor / 401

Memory / 402

Communication
interface / 403

Bus / 410

**Fig. 4**

<div align="center">**INTERNATIONAL SEARCH REPORT**</div>

| International application No. |
| --- |
| **PCT/CN2023/080900** |

**A.  CLASSIFICATION OF SUBJECT MATTER**

G01C25/00(2006.01)i

According to International Patent Classification (IPC) or to both national classification and IPC

**B.  FIELDS SEARCHED**

Minimum documentation searched (classification system followed by classification symbols)

IPC: G01C, G06F, G01S, E21B

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 千寻位置网络, 刘洋, 赵洪松, 邢菊红, 王勇松, 邱模波, 倾斜, 角度, 测量, 测试, 惯导, 惯性, 捷联, 平台, 比力, 加速度, 重力, 矢量, 速度, 积分, 位置, 投影, 补偿, 矩阵, 变换, 载体, 导航, 坐标系, IMU, tilt, angle, measurement, test, inertia, strapdown, platform, specific force, acceleration, gravity, vector, velocity, integral, position, projection, compensation, matrix, transformation, carrier, navigation, coordinate

**C.  DOCUMENTS CONSIDERED TO BE RELEVANT**

| Category* | Citation of document, with indication, where appropriate, of the relevant passages | Relevant to claim No. |
| --- | --- | --- |
| A | CN 113834502 A (INFORMATION ENGINEERING UNIVERSITY OF PLA) 24 December 2021 (2021-12-24) <br> description, paragraphs [0006]-[0146], and figures 1-2 | 1-10 |
| A | CN 103104251 A (BEIHANG UNIVERSITY) 15 May 2013 (2013-05-15) <br> entire document | 1-10 |
| A | CN 106123921 A (BEIJING UNIVERSITY OF TECHNOLOGY) 16 November 2016 (2016-11-16) <br> entire document | 1-10 |
| A | CN 110285838 A (CENTRAL SOUTH UNIVERSITY) 27 September 2019 (2019-09-27) <br> entire document | 1-10 |
| A | CN 113155150 A (ROCKET FORCE UNIVERSITY OF ENGINEERING OF PLA) 23 July 2021 (2021-07-23) <br> entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 June 2023** | **19 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/080900** |

### C.    DOCUMENTS CONSIDERED TO BE RELEVANT

| Category* | Citation of document, with indication, where appropriate, of the relevant passages | Relevant to claim No. |
|---|---|---|
| A | CN 113405563 A (BEIJING INSTITUTE OF MECHANICAL EQUIPMENT) 17 September 2021 (2021-09-17)<br>    entire document | 1-10 |
| A | CN 113093256 A (SHANGHAI HUACE NAVIGATION TECHNOLOGY CO., LTD.) 09 July 2021 (2021-07-09)<br>    entire document | 1-10 |
| A | JP 2003065793 A (JAPAN AVIATION ELECTRONICS INDUSTRY LTD.) 05 March 2003 (2003-03-05)<br>    entire document | 1-10 |

Form PCT/ISA/210 (second sheet) (July 2022)

**INTERNATIONAL SEARCH REPORT**
Information on patent family members

International application No.

**PCT/CN2023/080900**

| Patent document cited in search report | | | Publication date (day/month/year) | Patent family member(s) | | | Publication date (day/month/year) |
|---|---|---|---|---|---|---|---|
| CN | 113834502 | A | 24 December 2021 | None | | | |
| CN | 103104251 | A | 15 May 2013 | None | | | |
| CN | 106123921 | A | 16 November 2016 | None | | | |
| CN | 110285838 | A | 27 September 2019 | None | | | |
| CN | 113155150 | A | 23 July 2021 | None | | | |
| CN | 113405563 | A | 17 September 2021 | None | | | |
| CN | 113093256 | A | 09 July 2021 | WO | 2021127968 | A1 | 01 July 2021 |
| | | | | EP | 3865914 | A1 | 18 August 2021 |
| | | | | US | 2021364654 | A1 | 25 November 2021 |
| JP | 2003065793 | A | 05 March 2003 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210408828